# EUROPEAN PATENT APPLICATION

(11) **EP 3 623 993 A1**
(43) Date of publication of application: **18.03.2020**
(21) Application number: 19184448.9
(22) Date of filing: 04.07.2019
(51) Int. Cl.: G06K 9/00, G06K 9/20, G06K 9/62

(54) **METHOD AND DEVICE OF MULTI-FOCAL SENSING OF AN OBSTACLE AND NON-VOLATILE COMPUTER-READABLE STORAGE MEDIUM**

(30) Priority: 13.09.2018 CN 201811068019
(71) Applicant: Baidu Online Network Technology (Beijing) Co., Ltd., Beijing 100085 (CN)
(72) Inventor: GAO, Han, Beijing (CN); LI, Guo, Beijing (CN); SUN, Xun, Beijing (CN); XIA, Tian, Beijing (CN)
(74) Representative: Brevalex

(57) **Abstract**

A method and device of multi-focal sensing of an obstacle are provided. The method includes: acquiring detection results of obstacles at multiple moments by utilizing a camera with long focus lens and a camera with short focus lens, respectively; performing a target tracking to the acquired detection results, to obtain at least two tracking sequences, wherein each tracking sequence includes detection results acquired at the multiple moments for a same obstacle; and matching two random tracking sequences of the at least two tracking sequences, and combining the two random tracking sequences into a combined tracking sequence, if the matching is successful.

## Description

### TECHNICAL FIELD OF THE DISCLOSURE

The present application relates to a field of unmanned vehicle technology, and in particular, to a method, device of multi-focal sensing of an obstacle and a non-volatile computer-readable storage medium.

### BACKGROUND OF THE DISCLOSURE

For unmanned vehicle sensing systems, effective perception of distance is a very critical indicator. A camera with short focus lens has a wide field of view, and obstacles in the field of view are not liable to be cut off, which facilitates an association with and a tracking of obstacles, whereas there exists an issue of short sensing distance. A camera with long focus lens has a narrow field of view, a visual observation obtained by using the camera with the long focus lens is more accurate when a single obstacle is large. Meantime, the camera with long focus lens is liable to be used to detect small obstacles and is suitable for a detection of medium and long distance obstacles.

In existing obstacle sensing technique, only a single camera with short focus lens or a single camera with long focus lens is used to detect and track obstacles, in this manner, a contradiction between a field of view and a sight distance will be incurred. In other words, if a camera with short focus lens is utilized to detect and track obstacles, the coverage range can be relatively large, however, its sight distance is too short. On the other hand, if a camera with long focus lens is utilized to detect and track obstacles, its sight distance is relatively long, however, the coverable range can be small.

### SUMMARY OF THE DISCLOSURE

A method of multi-focal sensing of an obstacle is provided according to embodiments of the present disclosure, so as to at least solve the above technical problems in the prior art.

In a first aspect, a method of multi-focal sensing of an obstacle is provided according to an embodiment of the present disclosure, the method including:
acquiring detection results of obstacles at multiple moments by utilizing a camera with long focus lens and a camera with short focus lens, respectively;
performing a target tracking to the acquired detection results, to obtain at least two tracking sequences, wherein each tracking sequence includes detection results acquired at the multiple moments for a same obstacle; and
matching two random tracking sequences of the at least two tracking sequences, and combining the two random tracking sequences into a combined tracking sequence, if the matching is successful.

In conjunction with the first aspect, in a first implementation of the first aspect of the present disclosure, the matching two random tracking sequences of the at least two tracking sequences includes:
selecting the two random tracking sequences from the at least two tracking sequences;
acquiring, for each moment, detection results from the selected two tracking sequences respectively, and projecting detection results acquired by the camera with the long focus lens onto an imaging plane acquired by the camera with the short focus lens, if the detection results are acquired by cameras with different focus lenses, and calculating an Intersection over Union, IoU of the projected detection results and detection results acquired by the camera with the short focus lens;
determining an average of the IoUs calculated for the multiple moments; and
determining the matching of the selected two tracking sequences is successful if the average is greater than a preset threshold.

In conjunction with the first aspect, in a second implementation of the first aspect of the present disclosure, the combining the two random tracking sequences into a combined tracking sequence includes:
combining detection results of the two random tracking sequences to obtain a combined tracking sequence.

In conjunction with the first aspect, a first implementation of the first aspect and a second implementation of the first aspect, in a third implementation of the first aspect, it is further included:
acquiring a new detection result, and determining whether the new detection result is correlated with the combined tracking sequence;
creating a new tracking sequence if the new detection result is not correlated with the combined tracking sequence, wherein the new tracking sequence includes the new detection result; or
incorporating the new detection results into the combined tracking sequence if the new detection result is correlated with the combined tracking sequence.

In a second aspect, a device of multi-focal sensing of an obstacle is provided according to an embodiment of the present application, the device comprising:
an initial processing module, configured to perform a target tracking to detection results of obstacles acquired by a camera with long focus lens and a camera with short focus lens, respectively, to obtain at least two tracking sequences, wherein each tracking sequence includes the detection results acquired at multiple moments for a same obstacle; and
a combination module, configured to match two random tracking sequences of the at least two tracking sequences, and to combine the two random tracking sequences into a combined tracking sequence, if the matching is successful.

In conjunction with the second aspect, in the first implementation of the second aspect, the combination module is used for:
selecting the two random tracking sequences from the at least two tracking sequences;
acquiring, for each moment, detection results from the selected two tracking sequences, respectively, and projecting detection results acquired by the camera with the long focus lens onto an imaging plane acquired by the camera with the short focus lens, if the detection results are acquired by cameras with different focus lenses, and calculating an Intersection over Union, IoU of the projected detection results and detection results acquired by the camera with the short focus lens; and
determining an average of the IoUs calculated for the multiple moments; and
determining the matching of the selected two tracking sequences is successful if the average is greater than a preset threshold.

In conjunction with the second aspect, in the second implementation of the second aspect, said combination module is used for:
combining detection results of the two random tracking sequences to obtain a combined tracking sequence if the matching is successful.

In conjunction with the second aspect, a first implementation of the second aspect and a second implementation of the second aspect, in a third implementation of the second aspect, the device further comprises:
a correlation module, configured to acquire a new detection result, and to determine whether the new detection result is correlated with the combined tracking sequence, to create a new tracking sequence if the new detection result is not correlated with the combined tracking sequence, wherein the new tracking sequence includes the new detection result, or to incorporate the new detection result into the combined tracking sequence if the new detection result is correlated with the combined tracking sequence.

One of the above technical solutions has the following advantages or beneficial effects:
According to embodiments of the present application, detection results of obstacles are acquired at multiple moments by utilizing a camera with long focus lens and a camera with short focus lens, respectively, and a target tracking is performed in respective cameras to create different tracking sequences. Thereafter, two random tracking sequences of the at least two tracking sequences are matched, if the matching is successful, the two random tracking sequences acquired by cameras with different focus lenses are combined, in this way, a contradiction between a field of view of tracking and a sight distance existing in the prior art may be solved.

The above summary is provided only for illustration, and is not intended to be limiting in any way. In addition to the illustrative aspects, embodiments, and features described above, further aspects, embodiments, and features of the present disclosure will be readily understood from the following detailed description with reference to the accompanying drawings.

### BRIEF DESCRIPTION OF THE DRAWINGS

In the drawings, unless otherwise specified, identical reference numerals will be used throughout the drawings to refer to identical or similar parts or elements. The drawings are not necessarily drawn to scale. It should be understood that these drawings merely illustrate some embodiments of the present disclosure, and should not to be considered as limiting the scope of the disclosure.
FIG. 1 is a schematic diagram showing a setting manner and fields of view of a camera with long focus lens and a camera with short focus lens, according to a first embodiment of the present disclosure;
FIG. 2a is a schematic diagram of an image captured by a camera with long focus lens;
FIG. 2b is a schematic diagram of an image captured by a camera with short focus lens;
FIG. 3 is a schematic diagram of a method of multi-focal sensing of an obstacle according to a first embodiment of the present disclosure;
FIG. 4 is a flowchart for an implementation of step S130 according to a first embodiment of the present disclosure;
FIG. 5 is a schematic diagram showing a combination of tracking sequences according to an embodiment of the present disclosure;
FIG. 6 is a schematic diagram of a method of multi-focal sensing of an obstacle according to another embodiment of the present disclosure;
FIG. 7 is a schematic diagram of a device of multi-focal sensing of an obstacle according to an embodiment of the present disclosure;
FIG. 8 is a schematic diagram of a device of multi-focal sensing of an obstacle according to another embodiment of the present disclosure; and
FIG. 9 is a schematic structural diagram of an apparatus of multi-focal sensing of an obstacle according to an embodiment of the present application.

### DETAILED DESCRIPTION OF THE EMBODIMENT(S) OF THE DISCLOSURE

In the following, only certain exemplary embodiments are briefly described. As can be appreciated by those skilled in the art, the described embodiments may be modified in various different ways, without departing from the spirit or scope of the present application. Accordingly, the drawings and description are to be regarded as illustrative in nature instead of being restrictive.

According to embodiments of the present disclosure, a method and device of multi-focal sensing of an obstacle are provided. Hereafter, detailed description is made with respect to the technical solutions by way of the following embodiments.

### First Embodiment

A method of multi-focal sensing of an obstacle is provided, according to the present embodiment.

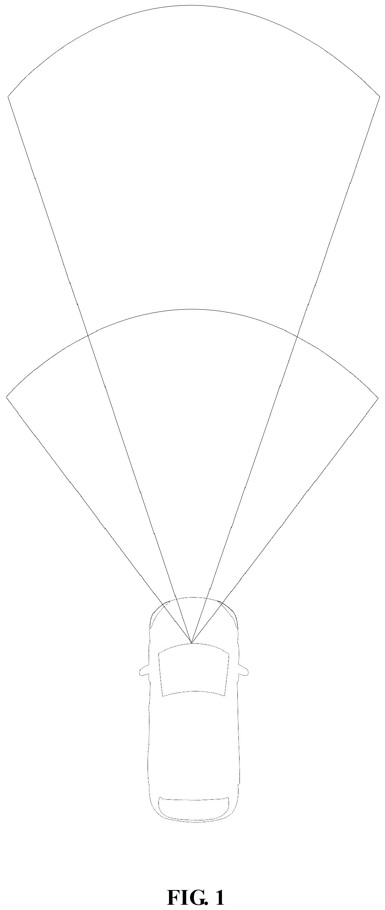

According to the present embodiment, a camera with long focus lens and a camera with short focus lens are both provided in the unmanned vehicle sensing system for capturing images. FIG. 1 is a schematic diagram showing a setting manner and fields of view of a camera with long focus lens and a camera with short focus lens, according to the first embodiment of the present disclosure. In FIG. 1, a camera with long focus lens and a camera with short focus lens are provided at the same position in the front of the unmanned vehicle. For example, the camera with long focus lens may have a focal length of 12 mm, and the camera with short focus lens may have a focal length of 6 mm. In FIG. 1, the sector area with smaller angle represents a field of view of the camera with the long focus lens, and the sector area with larger angle represents a field of view of the camera with the short focus lens.

It should be noted that an arrangement of a camera with long focus lens and a camera with short focus lens in the front of a vehicle in the present embodiment is merely an illustration. In other embodiments of the present disclosure, a camera with long focus lens and a camera with short focus lens may be disposed at other positions of an unmanned vehicle. Further, a plurality of sets of cameras with long focus lens and cameras with short focus lens can be disposed at different positions of an unmanned vehicle.

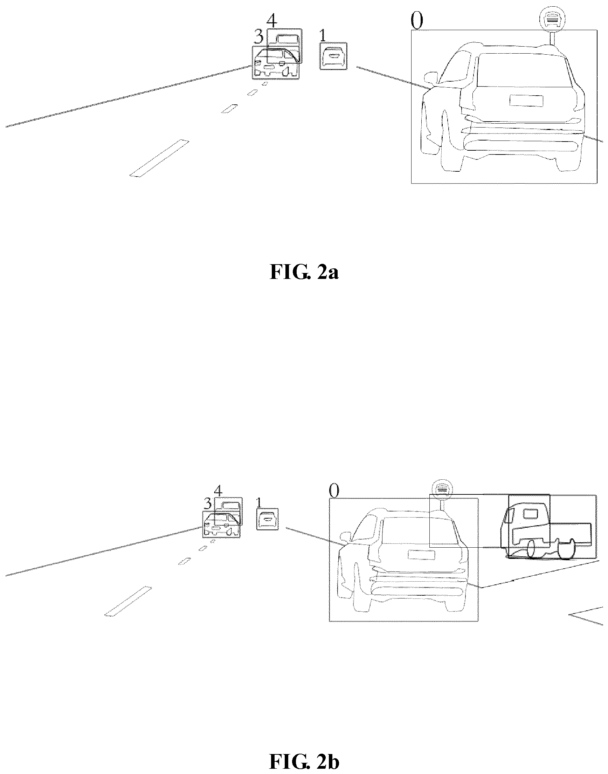

FIG. 2a and FIG. 2b show schematic diagrams of images captured by a camera with long focus lens and a camera with short focus lens, respectively, wherein the cameras are disposed in the front of the vehicle.

FIG. 2a is a schematic diagram of an image captured by a camera with long focus lens. Compared with FIG. 2b, the objects at distant locations shown in FIG. 2a can be clearly recognized, however, the field of view is relatively small. FIG. 2b is a schematic diagram of an image captured by a camera with short focus lens. Compared with FIG. 2a, the field of view in FIG. 2b is relatively large, however, the objects at distant locations cannot be clearly recognized.

It can be seen that the objects in the image of FIG. 2a can be fully included in FIG. 2b. If FIG. 2a is appropriately scaled down, the reduced image will coincide with the corresponding portions of FIG. 2b.

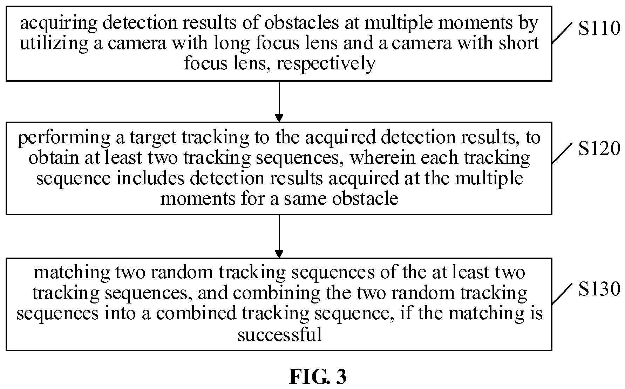

FIG. 3 is a schematic diagram of a method of multi-focal sensing of an obstacle, according to the first embodiment of the present disclosure. The method includes the following steps:
S110: acquiring detection results of obstacles at multiple moments by utilizing a camera with long focus lens and a camera with short focus lens, respectively.
   Both in the present embodiment and in other embodiments of the specification of the present disclosure, "obstacles" can be understood in a broad sense, for example, pedestrians, bicycles, electric vehicles, any other type of non-motor vehicles or motor vehicles around a present motor vehicle can be all considered as obstacles relative to the present vehicle (motor vehicle).
   After the detection results of obstacles are acquired, a target tracking is independently performed in the respective cameras at an initial stage, namely, the following step S120 is performed.
S120: performing a target tracking to the acquired detection results, to obtain at least two tracking sequences, wherein each tracking sequence includes detection results acquired at the multiple moments for a same obstacle.
   In this step, a target tracking to the detection results acquired by two cameras with different focus lenses are performed, respectively. For a same obstacle, if a camera with long focus lens and a camera with short focus lens acquire detection results, two tracking sequences can be created for this obstacle. These two tracking sequences are then acquired by a camera with long focus lens and a camera with short focus lens, respectively.
   The specific steps for target tracking may be implemented in the same way as the prior art, that is, performing a similarity calculation on the detection results, determining a match by calculating a similarity matrix, and determining a correlation of the detection results, thereby obtaining a tracking sequence.
S130: matching two random tracking sequences of the at least two tracking sequences, and combining the two random tracking sequences into a combined tracking sequence, if the matching is successful.
   In this step, two tracking sequences refer to a same obstacle and come from different cameras, if a matching is successful. Therefore, the two tracking sequences can be combined into a combined tracking sequence to achieve a fusion of tracking sequence across cameras.

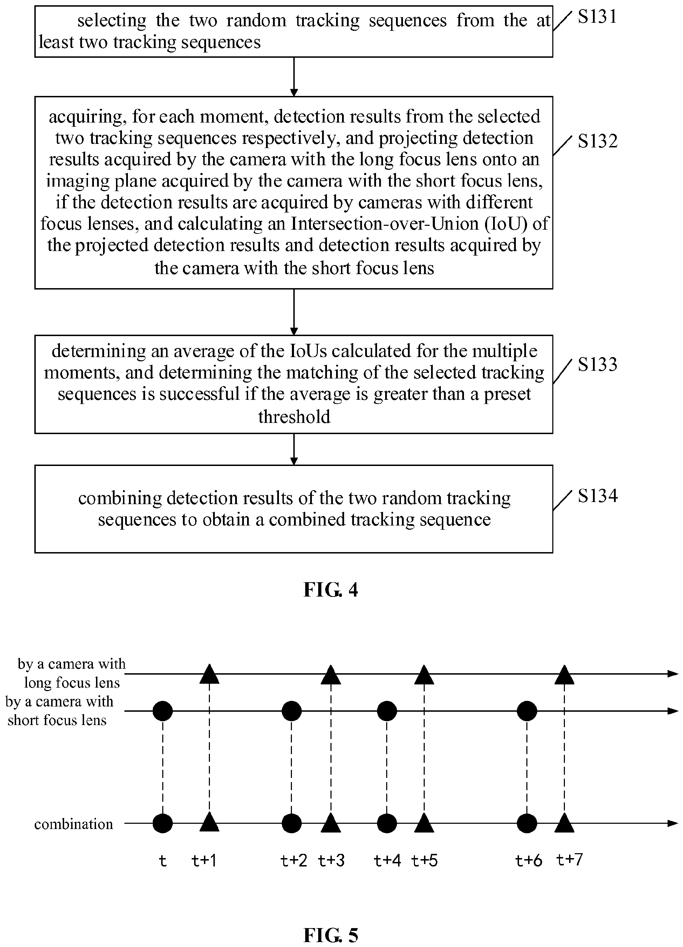

   FIG. 4 is a flowchart for an implementation of step S130 according to the first embodiment of the present disclosure, comprising:
S131: selecting the two random tracking sequences from the at least two tracking sequences;
   For example, selecting two random tracking sequences Ta and Tb from at least two existing tracking sequences, where Ta and Tb include a plurality of detection results, respectively;
S132: acquiring, for each moment, detection results from the selected two tracking sequences respectively, and projecting detection results acquired by the camera with the long focus lens onto an imaging plane acquired by the camera with the short focus lens, if the detection results are acquired by cameras with different focus lenses, and calculating an Intersection-over-Union, IoU of the projected detection results and detection results acquired by the camera with the short focus lens;
S133: determining an average of the IoUs calculated for the multiple moments, and determining the matching of the selected tracking sequences is successful if the average is greater than a preset threshold;
S134: combining detection results of the two random tracking sequences to obtain a combined tracking sequence if the matching is successful.

Specifically, di and dj can be detection results acquired at each moment from the tracking sequences Ta and Tb, as follows:
dᵢ ∈ *Tₐ*, *dⱼ* ∈ *T_{b}*, Timestamp(dᵢ) = *Timestamp*(*dⱼ*)
where di are detection results acquired from the tracking sequence Ta, dj are detection results acquired from the tracking sequence Tb, and di and dj are detection results acquired at a same moment.

If the above two detection results are acquired by cameras with different focus lenses, the detection result acquired by the camera with long focus lens can be projected onto an imaging plane acquired by the camera with short focus lens, so as to calculate an IoU of the projected detection results and the detection results acquired by the camera with short focus lens. The projection can be performed by using a pure rotation model.

The closer the IoU is to 1, it means that the more the two detection results overlap, then it is more likely that the two detection results are acquired for a same obstacle at a same moment.

For detection results acquired at all of the same moments from the two tracking sequences, the average of the above-mentioned IoU can be determined, and the matching of the two tracking sequences can be determined as being successful if the average is greater than a preset threshold.

After the determination of a successful match, the matched two tracking sequences can be combined. For example, the combined tracking sequence is a track = {d1, d2, d3, ... dn}, where di (i=1, 2, ..., n) can be either the detection results acquired by a camera with long focus lens or the detection results acquired by a camera with short focus lens.

FIG. 5 is a schematic diagram showing a combination of tracking sequences according to an embodiment of the present application. In FIG. 5, after determining that two tracking sequences acquired by a camera with long focus lens and a camera with short focus lens are matched, the detection results of the tracking sequence acquired by the camera with the long focus lens (represented by triangles in FIG. 5) and the detection results of the tracking sequence acquired by the camera with the short focus lens (represented by circles in FIG. 5) are combined into a combined tracking sequence.

### Second Embodiment

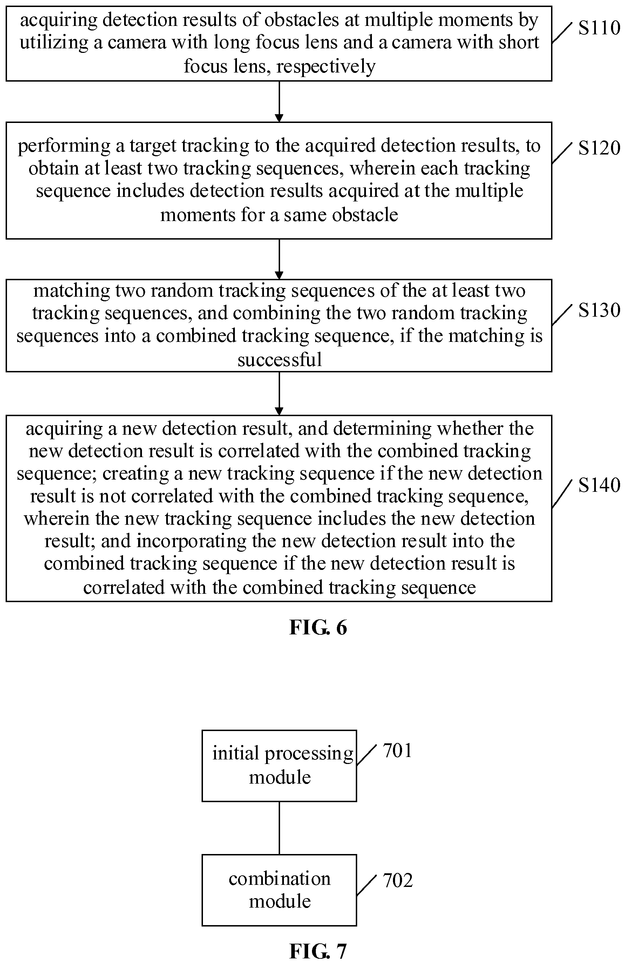

Another method of multi-focal sensing of an obstacle is provided according to the second embodiment of the present disclosure. FIG. 6 is a schematic diagram of a method of multi-focal sensing of an obstacle according to the second embodiment of the present disclosure. The method includes the following steps:
S110: acquiring detection results of obstacles at multiple moments by utilizing a camera with long focus lens and a camera with short focus lens, respectively;
S120: performing a target tracking to the acquired detection results, to obtain at least two tracking sequences, wherein each tracking sequence includes detection results acquired at the multiple moments for a same obstacle; and
S130: matching two random tracking sequences of the at least two tracking sequences, and combining the two random tracking sequences into a combined tracking sequence, if the matching is successful.
   The above-mentioned steps S110-S130 are the same as the specific manners of the steps S110-S130 in the first embodiment, thus detailed descriptions thereof are omitted herein.
   By performing steps S110 to S130, an initial stage, i.e., a combination of tracking sequences is completed. During the subsequent process, a new detection result can be directly associated with the combined tracking sequence, no matter by which camera it is acquired. That is, the following step S140 is performed.
S140: acquiring a new detection result, and determining whether the new detection result is correlated with the combined tracking sequence; creating a new tracking sequence if the new detection result is not correlated with the combined tracking sequence, wherein the new tracking sequence includes the new detection result, and incorporating the new detection result into the combined tracking sequence if the new detection result is correlated with the combined tracking sequence.

By applying the above process, according to the embodiment of the present disclosure, a fusion of tracking sequences acquired by a camera with long focus lens and a camera with short focus lens is implemented, thereby realizing a multi-focal sensing of an obstacle.

### Third Embodiment

A device of multi-focal sensing of an obstacle is provided, according to the present embodiment. FIG. 7 is a schematic diagram of a device of multi-focal sensing of an obstacle according to the third embodiment of the present disclosure. The device comprises:
an initial processing module 701, configured to perform a target tracking to detection results of obstacles acquired by a camera with long focus lens and a camera with short focus lens, respectively, to obtain at least two tracking sequences, wherein each tracking sequence includes detection results acquired at multiple moments for a same obstacle; and
a combination module 702, configured to match two random tracking sequences of the at least two tracking sequences, and to combine the two random tracking sequences into a combined tracking sequence, if the matching is successful.

Specifically, the above-mentioned combination module 702 can be used for:
selecting the two random tracking sequences from the at least two tracking sequences;
acquiring, for each moment, detection results from the selected two tracking sequences respectively, and projecting detection results acquired by the camera with the long focus lens onto an imaging plane acquired by the camera with the short focus lens, if the detection results are acquired by cameras with different focus lenses, and calculating an IoU of the projected detection results and detection results acquired by the camera with the short focus lens;
determining an average of the IoUs calculated for the multiple moments; and
determining the matching of the selected two tracking sequences is successful if the average is greater than a preset threshold.
combining detection results of the two random tracking sequences to obtain a combined tracking sequence if the matching is successful.

For example, di and dj can be detection results acquired at each moment from two random tracking sequences Ta and Tb:
dᵢ ∈ *Tₐ*, *dⱼ* ∈ *T_{b}*, Timestamp (dᵢ) = *Timestamp* (*dⱼ*)
where di are detection results acquired from the tracking sequence Ta, dj are detection results acquired from the tracking sequence Tb, and time stamps of di and dj are the same, namely, di and dj are detection results acquired at a same moment.

If the above-mentioned two detection results are acquired by cameras with different focus lenses, the detection results acquired by the camera with long focus lens can be projected onto an imaging plane acquired by the camera with short focus lens, so as to calculate an IoU of the projected detection results and the detection results acquired by the camera with the short focus lens. The projection can be performed by using a pure rotation model.

The closer the IoU is to 1, it means that the more the two detection results overlap, then it is more likely that the two detection results are acquired for a same obstacle at a same moment.

For detection results acquired at all of the same moments from the two tracking sequences, the average of the above-mentioned IoU can be determined, and the matching of the two tracking sequences can be determined as being successful if the average is greater than a preset threshold.

After the determination of a successful match, the matched two tracking sequences can be combined. That is, the detection results of the matched two tracking sequences are combined to obtain a combined tracking sequence.

For example, the combined tracking sequence is a track = {d1, d2, d3, ... dn}, where di (i=1, 2, ..., n) can be either the detection results acquired by a camera with long focus lens or the detection results acquired by a camera with short focus lens.

It can be seen that a fusion of tracking sequences acquired by a camera with long focus lens and a camera with short focus lens is implemented by using the device of multi-focal sensing of an obstacle provided by the embodiment of the present disclosure, thereby realizing a multi-focal sensing of an obstacle.

### Fourth Embodiment

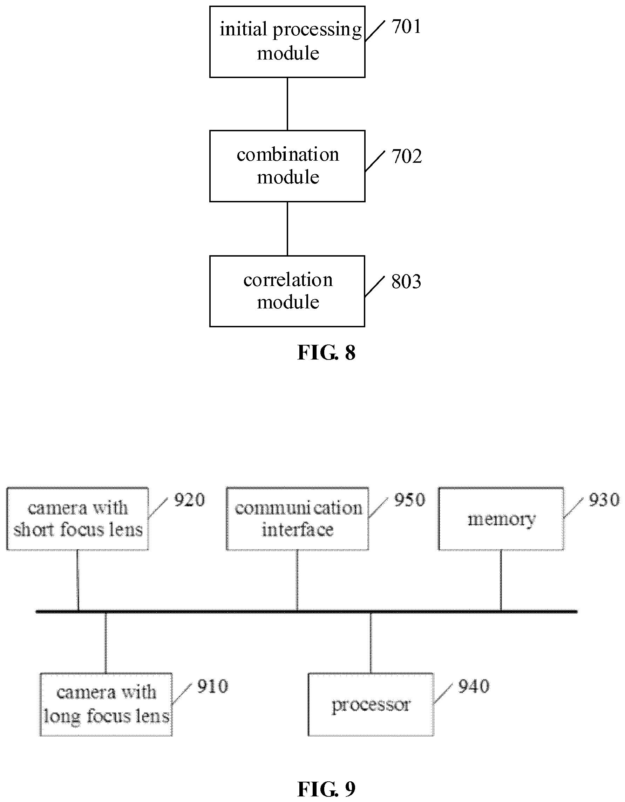

Another device of multi-focal sensing of an obstacle is provided according to the present embodiment. FIG. 8 is a schematic diagram of a device of multi-focal sensing of an obstacle according to the fourth embodiment of the present disclosure. The device includes:
an initial processing module 701, configured to perform a target tracking to detection results of obstacles acquired by a camera with long focus lens and a camera with short focus lens, respectively, to obtain at least two tracking sequences, wherein each tracking sequence includes detection results acquired at multiple moments for a same obstacle; and
a combination module 702, configured to match two random tracking sequences of the at least two tracking sequences, and to combine the two random tracking sequences into a combined tracking sequence, if the matching is successful.

Specifically, the above-mentioned combination module 702 can be used for:
selecting the two random tracking sequences from the at least two tracking sequences;
acquiring, for each moment, detection results from the selected two tracking sequences respectively, and projecting detection results acquired by the camera with the long focus lens onto an imaging plane acquired by the camera with the short focus lens, if the detection results are acquired by cameras with different focus lenses, and calculating an IoU of the projected detection results and detection results acquired by the camera with the short focus lens;
determining an average of the IoUs calculated for the multiple moments;
determining the matching of the selected two tracking sequences is successful if the average is greater than a preset threshold; and
combining detection results of the two random tracking sequences to obtain a combined tracking sequence if the matching is successful.

The device according to this embodiment may further includes:
a correlation module 803, configured to acquire a new detection result, and to determine whether the new detection result is correlated with the combined tracking sequence, to create a new tracking sequence if the new detection result is not correlated with the combined tracking sequence, wherein the new tracking sequence includes the new detection result, and to incorporate the new detection result into the combined tracking sequence if the new detection result is correlated with the combined tracking sequence.

It can be seen that a fusion of tracking sequences acquired by a camera with long focus lens and a camera with short focus lens is implemented by using the device of multi-focal sensing of an obstacle provided by the embodiment of the present disclosure, thereby realizing a multi-focal sensing of an obstacle. After a combination, a similarity calculation and a correlation can be implemented by using detection results of a new frame and a combined tracking sequence, thereby implementing a direct tracking to the detection results acquired by two cameras.

### Fifth Embodiment

An apparatus of multi-focal sensing of an obstacle is provided according to the fifth embodiment of the present disclosure. FIG. 9 is a schematic structural diagram of an apparatus of multi-focal sensing of an obstacle according to the fifth embodiment of the present disclosure. The apparatus comprises:
a camera with long focus lens 910 for acquiring detection results of obstacles;
a camera with short focus lens 920 for acquiring detection results of obstacles; and
a controller including a memory 930 and a processor 940, wherein the memory 930 has computer programs stored thereon, and the computer programs are executed by the processor 940 to enable the processor 940 to implement the method of multi-focal sensing of an obstacle according to above embodiments. The number of either the memory 930 or the processor 940 may be one or more.

The apparatus may further include:
a communication interface 950, configured to communicate with an external device to perform data interaction and transmission.

The memory 930 may include a high-speed RAM memory, or may also include a non-volatile memory, such as at least one disk memory.

If the memory 930, the processor 940 and the communication interface 950 are implemented independently, the memory 930, the processor 940 and the communication interface 950 may be connected to one another via a bus so as to realize mutual communication. The bus may be an industry standard architecture (ISA) bus, a peripheral component interconnect (PCI) bus, an extended industry standard architecture (EISA) bus, or the like. The bus may be categorized into an address bus, a data bus, a control bus and so on. For ease of illustration, only one bold line is shown in FIG. 9 to represent the bus, but it does not mean that there is only one bus or only one type of bus.

Optionally, in a specific implementation, if the memory 930, the processor 940 and the communication interface 950 are integrated on one chip, then the memory 930, the processor 940 and the communication interface 950 can complete mutual communication through an internal interface.

In the present specification, the description referring to the terms "one embodiment", "some embodiments", "an example", "a specific example", or "some examples" or the like means that the specific features, structures, materials, or characteristics described in connection with the embodiment or example are contained in at least one embodiment or example of the disclosure. Moreover, the specific features, structures, materials, or characteristics described may be combined in a suitable manner in any one or more embodiments or examples. In addition, various embodiments or examples described in the specification as well as features of different embodiments or examples may be united and combined by those skilled in the art, as long as they do not contradict with each other.

Furthermore, terms "first" and "second" are used for descriptive purposes only, and are not to be construed as indicating or implying relative importance or implicitly indicating the number of recited technical features. Thus, a feature defined with "first" and "second" may include at least one said feature, either explicitly or implicitly. In the description of the present disclosure, the meaning of "a plurality of' is two or more than two, unless otherwise explicitly or specifically indicated.

Any process or method described in the flowcharts or described otherwise herein may be construed as representing a module, segment or portion including codes for executing one or more executable instructions for implementing particular logical functions or process steps. The scope of the preferred embodiments of the present disclosure includes additional implementations in which functions may be implemented in an order that is not shown or discussed, including in a substantially concurrent manner or in a reverse order based on the functions involved. All these should be understood by those skilled in the art to which the embodiments of the present disclosure belong.

The logics and/or steps represented in the flowchart or otherwise described herein for example may be considered as an ordered list of executable instructions for implementing logical functions. They can be specifically embodied in any non-volatile computer-readable medium for use by an instruction execution system, apparatus or device (e.g., a computer-based system, a system including a processor, or another system that can obtain instructions from the instruction execution system, apparatus or device and execute these instructions) or for use in conjunction with the instruction execution system, apparatus or device. For the purposes of the present specification, "computer-readable medium" can be any means that can contain, store, communicate, propagate or transmit programs for use by an instruction execution system, apparatus or device or for use in conjunction with the instruction execution system, apparatus or device. The computer-readable medium described in the embodiments of the disclosure may a computer-readable signal medium or a computer-readable storage medium or any combination of a computer-readable signal medium and a computer-readable storage medium. More specific examples (non-exhaustive list) of computer-readable storage medium at least include: electrical connection parts (electronic devices) having one or more wires, portable computer disk cartridges (magnetic devices), random access memory (RAM), read only memory (ROM), erasable programmable read-only memory (EPROM or flash memory), fiber optic devices, and portable read only memory (CDROM). In addition, the computer-readable storage medium may even be a paper or other suitable medium on which the programs can be printed. This is because for example the paper or other medium can be optically scanned, followed by editing, interpretation or, if necessary, other suitable ways of processing so as to obtain the programs electronically, which are then stored in a computer memory.

It should be understood that individual portions of the present disclosure may be implemented in the form of hardware, software, firmware, or a combination thereof. In the above embodiments, a plurality of modules, steps or methods may be implemented using firmware or software stored in a memory and executed by a suitable instruction execution system. For example, if they are implemented in hardware, as in another embodiment, any one or a combination of the following techniques known in the art may be used: discrete logic circuits having logic gate circuits for implementing logic functions on data signals, application-specific integrated circuits having suitable combined logic gate circuits, programmable gate arrays (PGA), field programmable gate arrays (FPGA), etc.

Those skilled in the art may understand that all or some of the steps carried in the method of the foregoing embodiments may be implemented by using a program to instruct the relevant hardware, and the program may be stored in a non-volatile computer-readable storage medium. When executed, the program includes one or a combination of the steps in the method embodiments.

In addition, individual functional units in various embodiments of the present disclosure may be integrated in one processing module, or individual units may also exist physically and independently, or two or more units may also be integrated in one module. The above integrated module can be implemented in the form of hardware or in the form of a software functional module. The integrated module may also be stored in a non-volatile computer-readable storage medium if it is implemented in the form of a software functional module and sold or used as a stand-alone product. The storage medium may be a read-only memory, a magnetic disk or an optical disk, etc.

In summary, by applying the method, device, apparatus of multi-focal sensing of an obstacle, and a non-volatile computer readable storage medium provided according to the embodiments of the present disclosure, detection results of obstacles are acquired at multiple moments by utilizing a camera with long focus lens and a camera with short focus lens, respectively, and a target tracking is performed in the cameras respectively to obtain different tracking sequences. Thereafter, two tracking sequences acquired by cameras with different focus lenses are combined if a match of the two tracking sequences is determined, so as to realize a multi-focal sensing of an obstacle, thereby solving a contradiction between a field of view of tracking and a sight distance existing in the prior art.

The above description only relates to specific embodiments of the present disclosure, but the scope of protection of the present disclosure is not limited thereto, and any of those skilled in the art can readily contemplate various changes or replacements within the technical scope of the present disclosure. All these changes or replacements should be covered by the scope of protection of the present disclosure. Therefore, the scope of protection of the present disclosure should be subject to the protection scope of the appended claims.

## Claims

1. A method of multi-focal sensing of an obstacle, comprising:
acquiring detection results of obstacles at multiple moments by utilizing a camera with long focus lens and a camera with short focus lens, respectively;
performing a target tracking to the acquired detection results, to obtain at least two tracking sequences, wherein each tracking sequence comprises detection results acquired at the multiple moments for a same obstacle; and
matching two random tracking sequences of the at least two tracking sequences, and combining the two random tracking sequences into a combined tracking sequence, if the matching is successful.

2. The method of according to claim 1, wherein the matching two random tracking sequences of the at least two tracking sequences comprises:
selecting the two random tracking sequences from the at least two tracking sequences;
acquiring, for each moment, detection results from the selected two tracking sequences respectively, and projecting detection results acquired by the camera with the long focus lens onto an imaging plane acquired by the camera with the short focus lens, if the detection results are acquired by cameras with different focus lenses, and calculating an Intersection over Union, IoU of the projected detection results and detection results acquired by the camera with the short focus lens;
determining an average of the IoUs calculated for the multiple moments; and
determining the matching of the selected two tracking sequences is successful if the average is greater than a preset threshold.

3. The method according to claim 1, wherein the combining the two random tracking sequences into a combined tracking sequence comprises:
combining detection results of the two random tracking sequences to obtain a combined tracking sequence.

4. The method according to any one of claims 1 to 3, further comprising:
acquiring a new detection result, and determining whether the new detection result is correlated with the combined tracking sequence;
creating a new tracking sequence if the new detection result is not correlated with the combined tracking sequence, wherein the new tracking sequence comprises the new detection result; or
incorporating the new detection result into the combined tracking sequence if the new detection result is correlated with the combined tracking sequence.

5. A device of multi-focal sensing of an obstacle, comprising:
an initial processing module, configured to perform a target tracking to detection results of the obstacles acquired at multiple moments by utilizing a camera with long focus lens and a camera with short focus lens, respectively, to obtain at least two tracking sequences, wherein each tracking sequence comprises detection results acquired at the multiple moments for a same obstacle; and
a combination module, configured to match two random tracking sequences of the at least two tracking sequences, and combining the two random tracking sequences into a combined tracking sequence, if the matching is successful.

6. The device according to claim 5, wherein the combination module is used for:
selecting the two random tracking sequences from the at least two tracking sequences;
acquiring, for each moment, detection results from the selected two tracking sequences respectively, and projecting detection results acquired by the camera with the long focus lens onto an imaging plane acquired by the camera with the short focus lens, if the detection results are acquired by cameras with different focus lenses, and calculating an Intersection over Union, IoU of the projected detection results and detection results acquired by the camera with the short focus lens;
determining an average of the IoUs calculated for the multiple moments; and
determining the matching of the selected two tracking sequences is successful if the average is greater than a preset threshold.

7. The device according to claim 5, wherein the combination module is used for:
combining detection results of the two random tracking sequences to obtain a combined tracking sequence if the matching is successful.

8. The device according to any one of claims 5 to 7, wherein the device further comprises:
a correlation module, configured to acquire a new detection result, and to determine whether the new detection result is correlated with the combined tracking sequence, to create a new tracking sequence if the new detection result is not correlated with the combined tracking sequence, wherein the new tracking sequence comprises the new detection result, or to incorporate the new detection result into the combined tracking sequence if the new detection result is correlated with the combined tracking sequence.

9. An apparatus of multi-focal sensing of an obstacle, comprising:
a camera with long focus lens for acquiring detection results of obstacles;
a camera with short focus lens for acquiring detection results of obstacles; and
a controller comprising a memory and a processor, wherein computer programs are stored in the memory, and the computer programs, when executed by the processor, cause the processor to implement the method of any one of claims 1 to 4.

10. A non-volatile computer-readable storage medium having computer programs stored thereon, wherein the computer programs, when executed by a processor, cause the processor to implement the method of any one of claims 1 to 4.
